# EUROPEAN PATENT APPLICATION

(11) **EP 2 180 425 A1**
(43) Date of publication of application: **28.04.2010**
(21) Application number: 09380167.8
(22) Date of filing: 20.10.2009
(51) Int. Cl.: G06K 7/00

(54) **Reader module for electronic cards**

(30) Priority: 22.10.2008 ES 200803028
(71) Applicant: Angel Iglesias S.A., 20009 San Sebastian (ES)
(72) Inventor: Bretaña Santana, Manuel, 20009 San Sebastian (Gipuzkoa) (ES)
(74) Representative: Carpintero Lopez, Francisco

(57) **Abstract**

A reader module for electronic cards, which consists of a carcase (C) with a slot/slots (r) for the superimposed insertion of two electronic reader cards, one upper card (41) and another lower card (42); a printed circuit board (1), and a card reader (21) on the upper face of the printed circuit board (1) which reads the upper electronic card (41), and a card reader (22) under the lower side of the printed circuit board (1) which reads the lower electronic card (42).

It also has a card guide (3) under the slot/slots (r) and each card reader (21), (22), and a safety cover (5) on the carcase (C) covering the slot/slots (r).

## Description

This invention refers to a reader module for the electronic cards of employees, such as for receiving coded TV signals and decoding them.

In the current state of the art, several reader modules, widely used in this field of application and in other similar applications are already known. Modules are not known of the type described which simultaneously admit two cards and in which their reading can be done by either one or the other or on both sides of the electronic card.

The reader module for electronic cards which is the object of the invention is characterized because it consists of:
- A carcase with slot/slots for superimposed insertion of two electronic reading cards, an upper one and a lower one.
- A printed circuit board.
- A card reader on the upper face of the printed circuit board which reads the upper electronic card, and
- A card reader under the lower face of the printed circuit board which reads the upper electronic card.

It is also characterized because:
- It has a card guide between the slot/slots of the carcase and each of the two card readers.
- On the carcase and joined to it, there is a safety cover covering the slot/slots.

Without distinction, and included in the object of the invention, the carcase has two identical and symmetrically superimposed slots or has a single slot which carries the card guide centered.

Without distinction, and included in the object of the invention, the board has a printed circuit on one or both sides.

Without distinction, and included in the object of the invention, one or both electronic cards have means which can be read (chip or magnetic band) on one or both faces.

The advantages of this new reader module according to the invention are evident because its structuring is simplified and its capacity and features are multiplied, as two functions are included in the cards (in the case that the cards have their means of reading on a single face) and can reach up to four functions (which are the maximum positions in which the cards can enter the readers when they have means for being read on both faces).

Therefore, the aforementioned reader module for electronic cards constitutes a new invention which involves inventive activity, and can be applied industrially.

To better understand the object of this invention, shown in the drawings is a preferential way of practical realization, subject to supplementary changes which do not alter its basis.

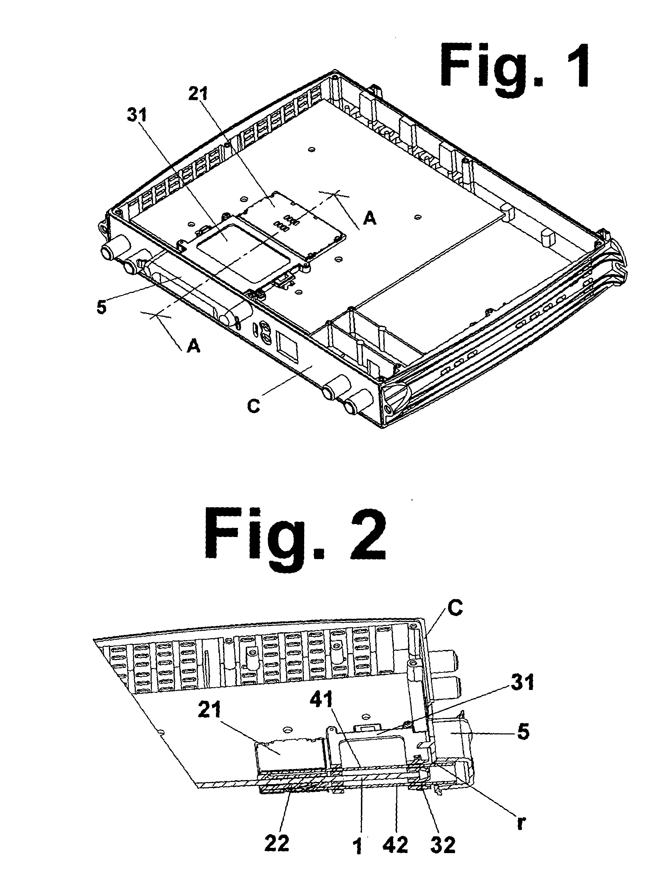

Figure 1 shows a general schematic view in perspective of the reader module for electronic cards which is the object of the invention, to view its components and operating position in an example of realization.

Figure 2 shows a partial schematic section, according to indication A:A of figure 1

Described below is an example of practical non-limiting realization of this invention. Other methods of realization in which supplementary changes are introduced which do not alter its basis are not ruled out; on the contrary, this invention also encompasses all its variations.

This invention involves a new reading module for electronic cards which allows reading through one, the other or both faces of two electronic cards. It consists of, at least, the following components:
c. - carcase
r. - slot/s
1. - printed circuit
21, 22. - Electronic card readers
31, 32. - Card guides
41, 42. - Electronic reading cards
5. - safety cover

According to the invention, and according to the realization shown, the carcase (C) carries one or two slots (r) defining the entries for the electronic reading cards (41), (42).

Inside of said carcase (C) is a centered printed circuit board (1) and on both sides of it, two card readers: one upper (21) and another lower (22).

Also inside of said carcase are (C) both card guides (31), (32):
- A card guide (31) to guide the upper card (41) from the time it is admitted in the slot (r) until it reaches the upper card reader (21), and
- A card guide (32) to guide the lower card (42) from the time it is admitted in the slot (r) until it reaches the lower card reader (22),

Between said printed circuit and each of the card readers y (21), (22) is placed the corresponding reading card (41), (42); thus, the reading card (21) placed on the upper face of the printed circuit (1) reads the upper electronic card (41) and the card reader (22) placed under the lower face of the printed circuit (1) reads the lower card (42).

It is without distinction and supplementary to the effects of the invention, and included in the object of the same, that in the carcase(C) are found two identical slots (r) symmetrically superimposed, or that it has a single slot (r) which carries the card guides (31), (32) centered.

It is also without distinction and supplementary to the effects of the invention, and included in the object of the same, that the electronic cards (41), (42) have their reading means (chip or magnetic band) on one or both sides, so that the corresponding reader (21), (22) can read them on one or both sides.

It is also without distinction and supplementary to the effects of the invention, and is included in the object of the same, that the circuit a (1) is a circuit printed on one or both sides.

## Claims

1. Reader module for electronic cards, **characterized by** consisting of:
a) A carcase (C) with slot/slots (r) for the superimposed insertion of two electronic reading cards: one upper card (41) and another lower card (42).
b) A printed circuit board (1)
c) A card reader (21) on the upper face of the printed circuit board (1) which reads the upper electronic card (41), and
d) A card reader (22) under the lower face of the printed circuit board (1) which reads the lower electronic card (42)

2. Reader module for electronic cards, according to claim 1, **characterized** because it has between the slot/slots (r) and each card reader (21), (22) a card guide (3).

3. Reader module for electronic cards, according to claim 1, **characterized** because it has, on the carcase (C) and joined to it, a safety cover (5) covering the slot/slots (r).

4. Reader module for electronic cards, according to claim 1, **characterized** because the carcase (C) has two identical and symmetrically superimposed slots (r).

5. Reader module for electronic cards, according to claim 1, **characterized** because the carcase (C) has a single slot (r) which carries the card guides (31), (32) centered.

6. Reader module for electronic cards, according to claim 1, **characterized** because the board (1) has a printed circuit on both sides.

7. Reader module for electronic cards, according to claim 1, **characterized** because one or both cards (41), (42) have their reading means on one or both sides.
